# EUROPEAN PATENT SPECIFICATION

(11) **EP 1 862 021 B1**
(45) Date of publication and mention of the grant of the patent: **03.12.2008**
(21) Application number: 06709868.1
(22) Date of filing: 23.02.2006
(51) Int. Cl.: H04Q 7/28

(54) **COMMUNICATING THE NUMBER OF PARTICIPANTS IN PUSH-TO-TALK OVER CELLULAR COMMUNICATION SESSIONS**
MITTEILUNG DER ANZAHL VON TEILNEHMERN IN "PUSH-TO-TALK OVER CELLULAR" KOMMUNIKATIONSSITZUNGEN
COMMUNICATION DU NOMBRE DE PARTICIPANTS DANS DES SESSIONS DE COMMUNICATION CELLULAIRE DE MESSAGERIE VOCALE INSTANTANEE

(30) Priority: 11.03.2005 GB 0505070
(43) Date of publication of application: 05.12.2007
(73) Proprietor: Vodafone Group PLC, Newbury Berkshire RG14 2FN (GB)
(72) Inventor: WONG, Gavin, Surrey KT12 5BP (GB); WATSON, John, Berkshire RG20 9UH (GB)
(74) Representative: Harries, Simon George
(86) International application number: PCT/GB2006/000636
(87) International publication number: WO 2006/095133

(56) References cited:
- OMA OPEN MOBILE ALLICANCE: "Push to talk over Cellular (PoC) - Architecture Draft Version 1.0 Open Mobile Alliance OMA-AD_PoC-V1_0-20041117-D" 17 November 2004 (2004-11-17), , XP002372965 cited in the application pages 38 - 39, chapter "8.14.1 Charging of PoC sessions" pages 123 - 125, chapter "9.10 Subscription to Participant Information" pages 137 - 138, chapter "9.13.1.2 Talk Burst Request Confirmed Procedure during a PoC session"
- ANONYMOUS: "3GPP TS 32.272 V1.0.0 (2005-02); 3rd Generation Partnership Project; Technical Specification Group Service and System Aspects;Telecommunication managment; Charging management; Push-to-talk over Cellular (PoC) charging; (Release 6)" February 2005 (2005-02), 3GPP TS 32.272 V1.0.0, XX, XX, PAGE(S) COMPLETE , XP002343600 pages 19 - 22, chapter "4.1 PoC Functional Entities" pages 24 - 25, chapter "5.1 PoC charging principles"
- OMA OPEN MOBILE ALLICANCE: "PoC User Plane Version; Draft Version 1.0.16; OMA-TS_PoC-UserPlane-V1_0-20050308-D; Pages 1, 88, 89" [Online] 8 March 2005 (2005-03-08), , XP002379726 Retrieved from the Internet: URL:http://member.openmobilealliance.org/f tp/Public_documents/POC/Permanent_document s> [retrieved on 2006-05-04] pages 88 - 89, chapter "6.5.3 TBCP Talk Burst Granted message"
- VODAFONE: "Change Request; OMA-POC-2005-0342-UP-CR-Charging-according -to-number-of-participants.doc" [Online] 21 March 2005 (2005-03-21), OMA OPEN MOBILE ALLICANCE , XP002379727 Retrieved from the Internet: URL:http://member.openmobilealliance.org/f tp/Public_documents/POC/2005/> [retrieved on 2006-05-05] the whole document

## Description

### Technical Field

The present invention relates to a method of and system for operating a push-to-talk over cellular (PoC) communication session for a group of telecommunication devices in which a talk burst (captured speech or other sounds) generated by one of the devices is transmitted to the other devices that are participating in the session, wherein a controlling function controls the joining of or leaving of each of the devices from the communication session and the granting of permission to the devices to send a talk burst, and in which each device communicates with the controlling function by means of a participating function associated with that device.

### Background Art

The third generation partnership project (3GPP) has recently defined a new concept known as IMS (IP - based Multimedia Subsystem). The aim of IMS is to allow users such as mobile telephone network operators to provide services to their subscribers as efficiently and effectively as possible. For example, the IMS architecture is likely to support the following communication types: voice, video, instant messaging, "presence" (a user's availability for contact), location-based services, email and web. Further communication types are likely to be added in the future.

This diverse collection of communication devices requires efficient session management due to the number of different applications and services that will be developed to support these communication types. The 3GPP have chosen Session Initiation Protocol (SIP) for managing these sessions.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages.

With IMS, users are no longer restricted to a separate voice call or data session. Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefinition is transparent to the end user.

One application of IMS is push-to-talk over cellular (PoC).

### Summary of Invention

According to a first aspect of the present invention, there is provided a method of operating a push-to-talk over cellular (PoC) communication session for a group of telecommunication devices in which a talk burst generated by one of the devices is transmitted to the other devices that are participating in the session, wherein a controlling function controls the joining of or leaving of each of the devices from the communication session and the generating of permission for the devices to send a talk burst, wherein each device communicates with the controlling function by means of a participating function associated with that device, and wherein the controlling function provides an indication of the number of devices currently participating in the communication session to the participating function associated with a device when that device is granted permission to send a talk burst to the other devices participating in the communication session.

In the embodiment to be described the controlling function generates a special form of "Talk Burst Granted" message, which is transmitted to the participating function associated with the device that wishes to transmit a talk burst in order to provide that device with permission to transmit the talk burst. The Talk Burst Granted message includes a field which indicates the current number of devices participating in the PoC communication session. This Talk Burst Granted message is received by the participating function associated with the device that is to transmit the talk burst. The data in the field is extracted by the participating function so that the participating function is aware of the number of devices to which the talk burst will be transmitted. This information could be used, for example, to charge the user of the device that transmits the talk burst in dependence upon the number of devices that will receive the talk burst. Advantageously, this may discourage the user of a device from transmitting a talk burst to an unnecessarily large number of other devices, thereby wasting communication resources.

According to a second aspect of the present invention, there is provided a communication system for operating a push-to-talk over cellular (PoC) communication session for a group of telecommunication devices in which a talk burst generated by one of the devices is transmitted to the other devices that are participating in the session, the system including means for performing a controlling function which controls the joining of or leaving of each of the devices from the communication session and the generating of permission for the devices to send a talk burst, wherein each device communicates with the controlling function by means of a participating function associated with that device, and wherein the controlling function provides an indication of the number of devices currently participating in the communication session to the participating function associated with a device when that device is granted permission to send a talk burst to the other devices participating in the communication session.

According to a third aspect of the present invention, there is provided a push-to-talk over cellular (PoC) server for use with a cellular telecommunications network for controlling the transmission of speech data to devices registered with that network, the server implementing a control function for establishing a PoC communication session between a group of said devices, maintaining a record of devices participating in the session and controlling the transmission of speech data from one of the devices ("the transmitting device") participating in the communication session to the other devices ("the receiving devices") participating in the session by selectively generating a message which grants the transmitting device permission to send speech data to the receiving devices, wherein said message includes an indication of the number of devices participating in the communication session such that the user of the transmitting device can be charged according to the number of receiving devices participating in the communication session and which will receive the speech data.

### Brief Description of the Drawings

A method and system for operating a communication session between a first device and a second device via a telecommunications network, embodying the invention, will now be described by way of example, with reference to the accompanying drawings in which:
Figure 1 shows schematically the components of a telecommunications system in accordance with an embodiment of the invention;
Figure 2 shows the relationships between PoC Clients and PoC Servers of the telecommunications system;
Figure 3 shows the exchange of data between elements of the telecommunications system when a PoC Client initiates a PoC communication session; and
Figure 4 shows the exchange of data between components in the telecommunications system when a PoC Client leaves PoC communication session;
Figure 5 shows the exchange of data between components in the telecommunication system when a PoC Client joins a PoC session;
Figure 6 shows the exchange of data between components in the telecommunications system when a PoC Client requests permission to send a talk burst to other PoC Clients during a PoC communication session; and
Figure 7 shows the structure of a talk burst granted message which is modified in accordance with an embodiment of the invention.

### Description of Mode of Carrying_Out the Invention

PoC allows a communication session to be established between a group of devices such that the user of one of the devices can speak and the users of each of the other devices will hear that person speak. During such a communication session each device functions like a two-way radio or walkie-talkie in a one-to-one or one-to-many group mode. Full duplex speech communication between the users of the respective devices during the communications session is not possible - only one user can speak at a time.

One feature of PoC is that, when the communication session is established, there is an "always on" communication link between the devices. When a user wishes to talk to the or each of the other devices associated with the communication session, the user issues an appropriate instruction to their device (typically using a soft key - that is, a key whose function is programmable), and the user's speech is captured by their terminal and instantly, or within a relatively short period of time, is transmitted to the or each of the other terminals and is reproduced on those terminals. This process is controlled by a PoC control function, to be described in more detail below. There is no requirement for the user inputting the speech data to dial the or each other device, and nor is there any requirement for the users of the devices receiving the speech to take any action to receive the speech data - it is automatically reproduced by their device when it is received (assuming, of course, the device is operating in an appropriate mode for allowing PoC communication).

PoC is described in more detail in the document "Push to talk over Cellular (PoC) - Architecture, Draft Version 1.0 - 10 February 2005" available from Open Mobile Alliance Limited (OMA).

In the embodiment to be described, a PoC communication session is established using IMS. However, it should be appreciated that a PoC communication session in accordance with the invention could be established over existing GSM/GPRS networks (or, indeed over other types of network such as the Internet) by exchange of data packets but without IMS.

One of the advantages of PoC is that less bandwidth may be required for a PoC call (which uses the packet switched domain) than a normal voice call (which uses the circuit switched domain). In a circuit switched call, network capacity is used for the full duration of the call from the initial connection attempt to the time that the call terminates. Network capacity is used even when no speech data is transmitted. In a PoC call only the actual blocks of data that contain speech will be transmitted. A PoC communication session between devices might last one hour. However, if speech is only transmitted for five minutes during that hour, only network capacity corresponding to that five minutes is used.

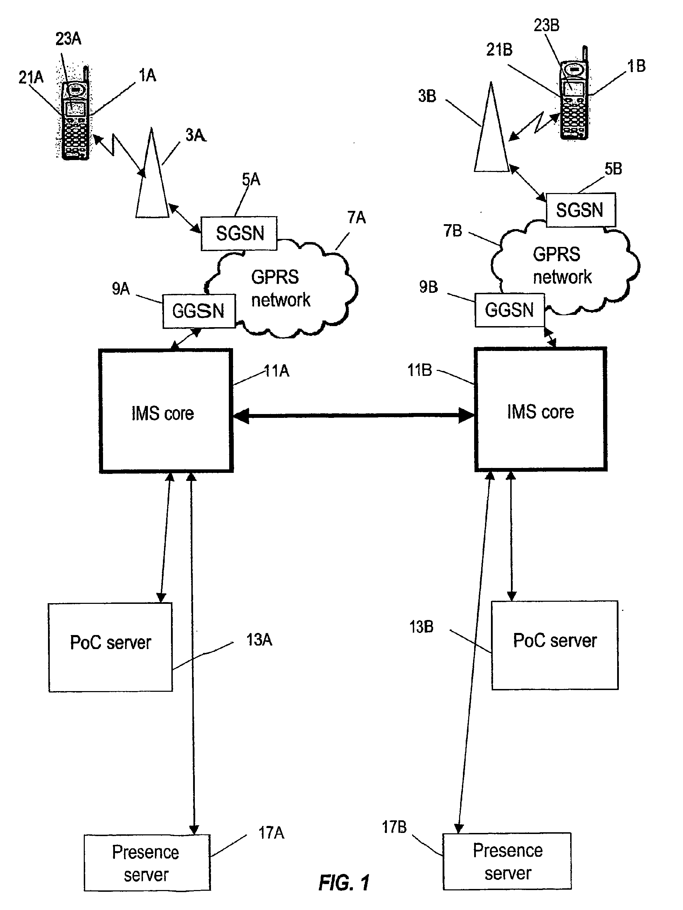

Referring initially to Figure 1, a GPRS enabled mobile device 1A communicates wirelessly with radio network controller (RNC) 3A (in fact via a "node B", which is not shown for the sake of simplicity). A fixed (wired) connection between RNC 3A and serving GPRS support node (SGSN) 5A associated with mobile telecommunications network 7A allows packet data to be transmitted between the mobile device 1A and the mobile telecommunications network 7A in the packet switched domain. Gateway GPRS support node (GGSN) 9A provides an interface between the mobile telecommunications network 7A and IMS (SIP) core 11A. The IMS core 11A contains SIP proxys and SIP registers. PoC Server 13A is coupled to the IMS core 11A for providing PoC functionality (to be described in more detail below).

A group and list management function may be provided that is responsible for the management of contact lists (containing the addresses of other users), group lists (containing the addresses of other groups), access lists and permissions management. A contact may be an identity of a user, or a group. A contact may include the SIP URI or a TEL URI of the entity, type of the entity (user or group) and optionally the display name. Each PoC user may have two access lists: a user accept list and user reject list. Access lists may be used for controlling whether the PoC Server is allowed or not to send talk session requests to the user when requested by other user. Each PoC user may define permission management rules that describe who is allowed to contact him/her using the PoC service. The PoC Server may implement the access control policy according to these defined rules.

A presence server 17A provides the IMS core 11A with information indicating whether or not devices associated with the mobile telecommunications network 7A are available for contact or not.

Figure 1 shows a second network including elements corresponding to the elements of the first network described above, which elements are designated for the same reference numeral but with the suffix "B". Data are exchanged between the IMS core 11A of the first network and the IMS core 11B of the second network using SIP signalling, which is transmitted, for example, via the Internet.

Of course, it should be appreciated that, although only one mobile device 1A and 1B, and one RNC 3A and 3B is shown associated with each mobile telecommunications network 7A and 7B, typically there will be a multiplicity of RNC's and mobile devices associated with each mobile telecommunications network 7A and 7B.

It is also important to note that, although in the embodiment described the mobile terminal 1A is associated with a different network 7A from the mobile terminal 1B, the invention is equally applicable to a scenario where the users of two mobile terminals associated with the same mobile telecommunications network wish to establish a PoC session.

When the user of mobile device 1A wishes to establish a PoC communication session with the user of mobile terminal 1B, the users of respective mobile devices will associate themselves in a group, between which PoC messages may be sent, by exchanging contact information and possibly other information (such as a password).

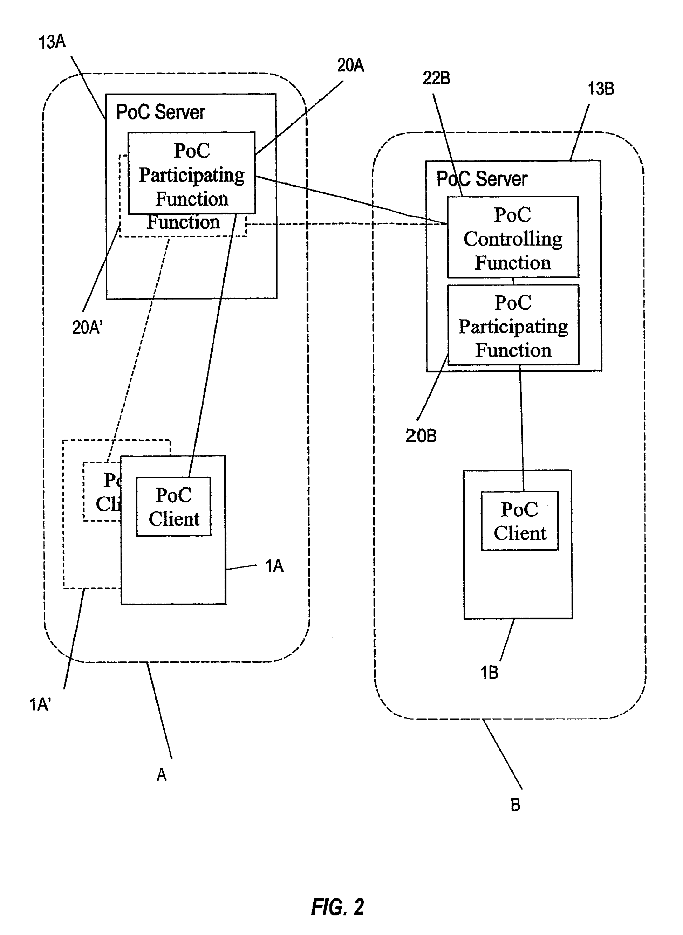

Figure 2 shows the flow of data between the PoC elements in a first network A and a second network B. The mobile device 1A comprises a PoC Client, which supports PoC communication sessions. PoC messages are transmitted from the PoC Client to the PoC participating function 20A provided by the PoC Server 13A of network A. A respective PoC participating function is provided for each PoC Client. As can be seen in Figure 2, where a second mobile device 1A' is provided in the network A, a second PoC participating function 20A' is also provided (as indicated by dashed lines). The PoC participating functions, in known manner, make a record of each time a PoC Client transmits voice data for reproduction on the mobile devices to which the PoC communication session relates. Such voice data is referred to as a "talk burst". Each PoC participating function records each time a talk burst is pushed by its associated PoC Client. These records can be used for making a charge to the user of a respective PoC Client for each talk burst pushed by that client.

In the second network B, mobile terminal 1B also comprises a PoC Client which communicates with a respective PoC participating function 20B provided by the PoC Server 13B. The PoC Server 13B also provides a PoC controlling function 22B for the PoC communication ses sion between the PoC Clients. Messages from each PoC Client are routed via their associated PoC participating function to the PoC controlling function. The PoC controlling function 22B provides centralised PoC session handling. It controls when and to whom talk bursts received from the various PoC participating functions are onwardly transmitted.

For each PoC communication session there is only one controlling PoC function. The determination of which server performs the controlling PoC function and which server(s) perform the participating PoC function takes place during PoC session set-up and does not change during the session. In the embodiment to be described, where there are only two devices (1A and 1B) in the PoC session, PoC Server 13B performs a controlling PoC function and a participating PoC function, and PoC Server 13A will perform only a participating PoC function. The PoC Server performing a participating PoC function always has a direct communication path to a user's mobile device (PoC Client) and a direct communication path to the PoC Server performing the controlling PoC function for transmitting PoC session signalling messages.

The controlling PoC function:-
- Provides centralized PoC session handling
- Provides the centralized media distribution
- Provides the centralized floor control functionality including talker identification (for arbitrating requests from PoC Clients - devices 1A and 1B - for the right to speak)
- Provides SIP session handling, such as SIP session organisation, termination, etc.
- Provides policy enforcement for participation in group sessions
- Provides information about the participant (the user of the PoC Client)
- Collects and provides centralized media quality information
- Provides centralized charging reports
- Supports user plane adaptation procedures
- Supports talk burst control protocol negotiation

The participating PoC function may:-
- Provide PoC session handling
- Support user plane adoption procedures
- Support talk burst control protocol negotiation
- Provide the media relay function between PoC client (device 1 A,1B) and controlling PoC Server 22B
- Provide user media adaptation procedures
- Provide the floor control message relay function between PoC Client and controlling PoC Server 22B
- Provide SIP session handling, such as SIP session origination, termination, etc. on behalf of the represented PoC Client
- Provide policy enforcement for incoming PoC session (e.g. access control, availability status, etc.)
- Collect and provide media quality information
- Provide the participant charging reports
- Provide talk burst control message relay function between a PoC Client and a PoC Server performing the controlling PoC function - to be described in more detail below.

The IMS cores 11A and 11B perform the following functions that are needed in support of the PoC service:-
- Routes the SIP signalling between the PoC Client (devices 1A and 1B) and the PoC Server
- Provides discovery and address resolution services
- Supports SIP compression
- Performs authentication and authorization of PoC Client based on user's service profile
- Maintains the registration state
- Provides charging information

While the PoC communication session is established, the user of mobile terminal 1A can talk (that is, send speech data for reproduction on the device 1B) by pressing soft key 21A, above which, during the PoC communication session, the sign "press-to-talk" or "PTT" is displayed on the display 23A of the mobile terminal 1A. Of course, if more than one other device also joins the communication session, a plurality of soft keys may be provided, or a suitable graphical user interface provided, to allow entry of a command for speech data to be sent to any one of or all of the group of devices.

The half duplex nature of the PoC service requires that before a PoC Client can send a talk burst the PoC Client must negotiate the permission to send a talk burst.

The PoC Server performing the controlling PoC Function causes talk bursts to be arbitrated between PoC Clients as follows:-
- The PoC Client s ends a request for the permission to send a talk burst to the controlling PoC Server.
- The controlling PoC Server allows the request to send a talk burst if no other PoC Client currently has permission to send a talk burst. The controlling PoC Server may reject a request to send a talk burst due to policy decision by the controlling PoC Server.
- The controlling PoC Server rejects the request to send a talk burst if another PoC Client has the permission to send a talk burst and the controlling PoC Server or the PoC Client does not support queuing. The controlling PoC Server may queue a request to send a talk burs t if queuing is supported by the PoC Client. The controlling PoC Server may place a request in the queue depending on the priority of the PoC Client and by the controlling PoC Server. The controlling PoC Server may limit the number of positions in a talk burst queue.
- If the controlling PoC Server supports more than one level of priority, the PoC Server will place a request in a talk burst request queue according to the priority of the PoC Client. The priority level is determined by the controlling PoC Server and may be subject to a priority request received from the PoC Client.
- The controlling PoC Server may limit the number of positions in a talk burst request queue. The controlling PoC Server may support a number of queue positions per session that is at least equal to the number of participants in a PoC Session, up to the permitted maximum number of participants.
- At any time there is at most one request to send a talk burst queued for each PoC Client in each PoC session. If a second request is received from a PoC Client when a request is already queued and the second request has a different priority than the queued request, the PoC Server will remove the first request and queue the second request.
- The PoC Server supervises the length of a talk burst and revokes the permission to talk if the length exceeds a configurable maximum talk burst duration.

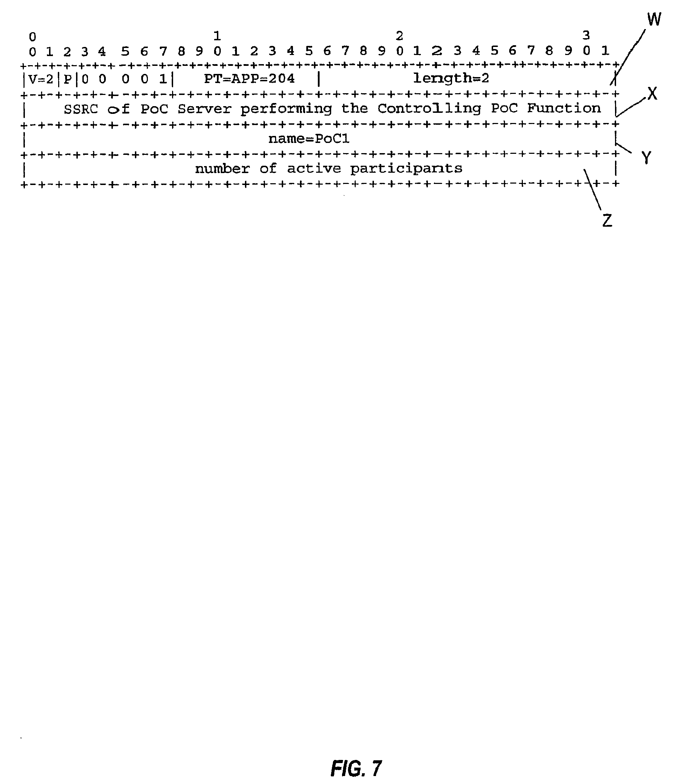

The PoC Client and the controlling PoC Server support the following requests/responses/indications using Session Description Protocol (SDP):-
- Talk Burst request:
   The request is sent by the PoC Client to the controlling PoC Server in order to request permission to send a talk burst. The request may include:
      o Priority level request indicator, if queuing is supported by the PoC Client and the client requests a priority level
      o A PoC Session identifier.
- Talk Burst Granted response:
   The response is sent by the controlling PoC Server to the PoC Client in order to confirm that the PoC Client has obtained permission to send one talk burst. The Talk Burst Granted response message is shown in Figure 7, and conventionally may include:
      o initial fields in the message that identify the application (in this case talk burst control), the message name (i.e. Talk Burst Granted) and the length of the message contents (field W)
      o The "synchronisation source" or SSRC value of the PoC Server performing the controlling PoC function (field X). This identifies the source of the message (in this case, the Talk Burst Granted message and therefore the Controlling PoC function - unique in combination with the network address to identify a session at a particular point in time.
      o An identifier of the PoC client for which the message is intended (field Y). This represents static information that identifies that the signalling is related to OMA PoC.
- Talk Burst Reject response:
   The response is sent by the controlling PoC Server to the PoC Client to reject a request to send a talk burst. The talk burst reject includes:
      o A possible reject reason shall include:
         o Another PoC Client already has been given permission to send a talk burst and no queuing of the request is allowed;
         o Another PoC Client already has been given permission to send a talk burst and the queue is full.
         o The PoC Client is not allowed to request permission to send a talk burst at the moment; and,
         o Only one Participant in the PoC Session. For example if only one Participant is left in a PoC Session
- Talk Burst Completed indication:
   The indication is sent by the PoC Client to the controlling PoC Server in order to indicate that the sending of the talk burst is completed. The talk burst completed indication may include:
      o A PoC Session identifier.
- No Talk Burst indication:
   The indication is sent by the controlling PoC Server to all PoC Clients in order to inform the PoC Clients that no one has requested for the permission to send a talk burst at the moment and, if queuing is supported, that there is no one in the queue. The no talk burst indication includes:
      o A PoC Session identifier.
- Receiving Talk Burst indication:
   The indication is sent by the controlling PoC Server to all PoC Clients (with the exception of the PoC Client with the permission to send a talk burst) in a PoC session in order to inform them that another PoC Client has the permission to send a talk burst and that the PoC Client(s) should prepare for receiving a talk burst.
- The receiving Talk Burst indication includes
   o The identity of the PoC Participant (user) at the PoC Client sending the talk burst (in the event that more than one user uses the PoC Client). The identity provided allows the PoC Client to determine:
      o The PoC Address in the case the sender does not want to be anonymous; and,
      o The display name of the PoC Participant at the PoC Client sending a talk burst.
      o Receiving talk burst indication may include:
      o A PoC Session identifier.
      o Acknowledgement request
      o Group Session identity.
- Stop Talk Burst indication:
   The indication is sent by the controlling PoC Server to the PoC Client who has the permission to send a talk burst in order to revoke the permission to talk.
   The stop talk burst indication includes:
      o A PoC Session identifier.
      o Reason code. Possible reject reasons are:
         o Only one User in the PoC Session. For example if only one Participant is left in a PoC Session; and,
         o Talk Burst too long indicating that the Talk Burst has exceeded the maximum duration.
- Talk Burst Acknowledgement.
   o The indication is sent by the PoC Client to the controlling PoC Server as a response to the Receiving Talk Burst.

If the controlling PoC Server and the PoC Client support queuing of the Talk Burst Request some or all of the following requests/responses/indications are supported:
- Talk Burst Request Queue Position Status message:
   The response is sent by the controlling PoC Server to the PoC Client to indicate that the talk burst request is queued, or to indicate changes in the status of the Talk Burst request. The indication may include:
      o Queue position.
      o Request priority indication
      o A PoC Session identifier.
- Talk Burst Queue Position request:
   The request is sent by the PoC Client to read the position in the queue.
   The request may include:
      o A PoC Session identifier.
         The controlling PoC Server responds with a talk burst request queue position status message

Support for queued talk burst control is transparent to a PoC Server performing the participating PoC function that is involved in media processing. The PoC Server performing the participating PoC function relays all messages related to talk burst control to the PoC Server performing the controlling PoC function or PoC Client, as appropriate, in any session that is not being filtered by the PoC Server performing the participating PoC Function, without modification of the content of the messages.

A PoC Server performing controlling PoC function capable of supporting queued talk burst control supports queued talk burst control for those PoC Clients that request it. A PoC session may include both PoC Clients that do not support or request use of queued talk burst control and PoC Clients that request use of queued talk burst control.

In a PoC session, there can be a number ofparticipants being PoC subscribers of several different PoC operators (the different PoC operators typically offering PoC service in respective mobile telecommunications networks). In known arrangements, each PoC operator is able to charge their contracted participants independently of any other PoC operator's charging policy. The participating PoC function measures and sends charging reports to the charging system of the relevant operator for the charging of the participant.

The charging in the known arrangement may be based on the number of sent (pushed) talk bursts, for example. Each talk burst from a PoC Client is sent to the controlling PoC Server via that client's participating PoC Server. The participating PoC Server is therefore able to record the number of sent talk bursts and provide this information to the charging system for the PoC operator with which both the client and the participating PoC Server are associated.

In some circumstances it would be advantageous to charge a PoC Client additionally on the basis of the number of recipients of a talk burst sent by that PoC Client. A talk burst sent by a PoC Client is received by every other participant in that PoC communication session. The number of recipients reflects the quantity of communication system resource used by the PoC to transmit the talk burst (which recipients might be dispersed across a plurality of networks). Charging PoC Clients on this basis will tend to result in more considered use of network resources by discouraging clients from transmitting PoC talk bursts to an unnecessarily large number of participants. If a PoC Client wishes a talk burst to be transmitted to a subset of participants in an existing PoC session, a new session can be initiated between a group of PoC Clients consisting only of that subset of participants of the existing PoC session.

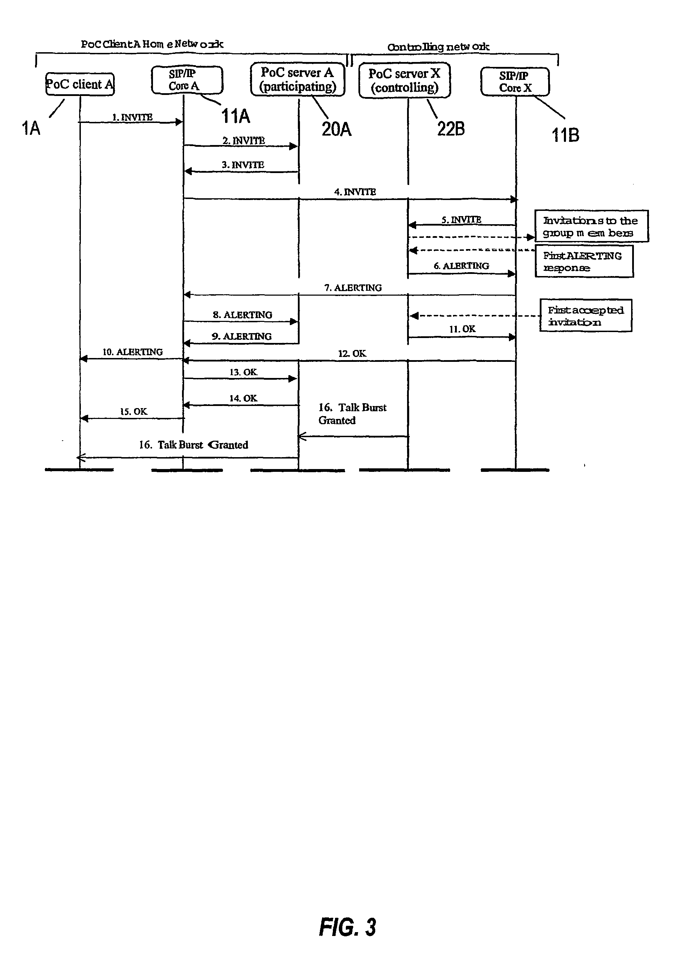

Figure 3 shows the messages transmitted when mobile terminal 1A wishes to initiate a PoC session with and push to talk burst to mobile terminal 1B and other member devices of a group. As shown in Figure 3, the mobile terminal 1A ("PoC Client A") issues a SIP INVITE message (message "1.") addressed to mobile device 1B (and, if intended for a group of devices, addressed to each of the other devices in the group) to IMS core 11A ("SIP/IP core A") - via the intermediate elements shown in Figure 1. Message "1." may include the following information elements:-
a. Group identity information
b. PoC address of the user initiating this PoC Session
c. PoC service indication
d. Media parameters of PoC Client A (device 1A)
e. Talk burst control proposal

The IMS core 11A passes the SIP INVITE message (message "2.") to the participating PoC function 20A ("PoC Server A (participating)") of the PoC Server 13A, which checks the availability and allowability of the transmission of speech data to the device 1B by the consulting group and list management function server and presence server 17A/17B. Message "2." may include:-
a. Group identity information
b. PoC address of the user initiating this PoC Session
c. PoC service indication
d. Media parameters of PoC Client A (device 1A)
e. Talk burst control proposal.

If the availability and allowability criteria are met, the PoC Server 13A then identifies that device 1B is not hosted by PoC Server 13A, and it sends the SIP INVITE message (message "3.") to the IMS core 11A. Message "3." may include:-
a. Group identity information
b. PoC address of the user initiating the PoC session
c. PoC service indication
d. PoC Server 13A (participating) selected media parameters
e. Talk burst control proposal.

The IMS core 11A transmits the SIP INVITE message (message "4.") to the IMS core 11B ("SIP/IP Core X") associated with the second mobile telecommunications network 7B. Message "4." may include:-
a. Group identity information
b. PoC address of the user initiating the PoC session
c. PoC service indication
d. PoC Server 13A (participating) selected media parameters
e. Talk burst control proposal.

The IMS core 11B then transmits the SIP INVITE message (message "5.") to the controlling PoC function 22B ("PoC Server X (controlling)") of PoC Server 13B. Message "5." may include:-
a. Group identity information
b. PoC address of the user initiating the PoC session
c. PoC service indication
d. PoC Server 13A (participating) selected media parameters
e. Talk burst control proposal.

PoC Server 13B generates an initiation message for the device 1B, which is sent to the IMS core 11B and transmitted to the mobile device 1B via GGSN 9B, SGSN 5A and RNC 3B. (Device 1B is not shown in Figure 3 for the sake of simplicity.) The PoC Server 13B performs the necessary terminating service control (e.g. authorizes the PoC Client A) and if the PoC address of the PoC user initiating the PoC session is authorized successfully, the PoC Server 13B invites the other group members to the PoC session. In the case the PoC group session already is ongoing the PoC Client is added to the PoC session.

A "first ALERTING response" message is received from the mobile device 1B (assuming it is in an area of coverage by the mobile telecommunications network 7B) and this is passed to the PoC Server 13B via the intermediate elements shown in Figure 1. A message ALERTING, advising of successful receipt of the SIP INVITE message by the device 1B, (message "6.") is transmitted from the PoC Server 13B to the IMS core 11B, and from there to the IMS core 11A associated with the first mobile telecommunications network 7A (message "7."). The IMS core 11A of the first mobile telecommunications network transmits this message (message "8.") to the PoC Server 13A. The message (message "9.") is returned to the IMS core 11A, from where it is forwarded to the mobile device 1A (message "10.").

Messages "6." to "8." may include PoC Server 13B selected media parameters. Messages "9." and " 10." may include PoC Server 13A selected media parameters.

Messages 11-13: When the mobile device 1B accepts the PoC session invitation, the PoC Server 13B sends an OK response to the PoC Server 13A (participating) along the same signalling path. Information elements contained in the OK response may include:
a. PoC Server X (controlling) selected Media Parameters
b. Selected Talk Burst Control Protocol.

Messages 14-15: The PoC Server 13A sends an OK response to the mobile device 1A along the same signalling path. Information elements in the OK response may include:
a. PoC Server A (participating) selected Media Parameters
b. Selected Talk Burst Control Protocol.

Message 16: The PoC Server 13B (controlling) sends the Talk Burst Granted response to the PoC Server 13A (participating).

Message 17: The PoC Server 13A (participating) relays the Talk Burst Granted response to the mobile device 1A.

Audio data received by the microphone of the mobile terminal 1A is then captured by that mobile terminal and is transmitted as packet data to the network 7A, and to the IMS core 11A, allowing the communication of this data to the IMS core 11B of the second network. This data are received by the mobile terminal 1B where it is automatically reproduced by the loudspeaker of that mobile terminal as an audio signal, allowing the user of mobile terminal 1B to receive and understand the speech of the user of mobile terminal 1A. The speech data are reproduced by the mobile terminal 1B without requiring any user operation by the user of mobile terminal 1B. Typically the speech data will be reproduced by the terminal 1B at virtually the same time as it is input to the mobile terminal 1A.

Once a session is established, talk burst control is independent of session related procedures.

From the above-described message flows shown in Figure 3, the following points should be noted. SIP INVITE message "5" causes the controlling PoC Server 13B to invite all group members to the PoC session. The invitation of each participant to the PoC session is handled separately by the controlling PoC function. When each group member becomes a participant to the PoC session, messages therefrom will be routed through a respective participating PoC function. Although, in messages "11." to "15.", the mobile device 1A that initiates the communication session by inviting another group member to join the PoC communication session is notified that their invitation has been accepted, there is no mechanism for informing the mobile device 1A when a group member leaves the PoC communication session, or when further group members become available and join the PoC communication session. A talk burst pushed from mobile terminal 1A will be automatically transmitted to all participants in the PoC communication session, but (for example) the participating PoC function 20A associated with mobile device 1A has no mechanism for determining to how many other participants the talk burst will be transmitted. To explain this, the procedure when a PoC Client leaves and joins a PoC communication session will now be described.

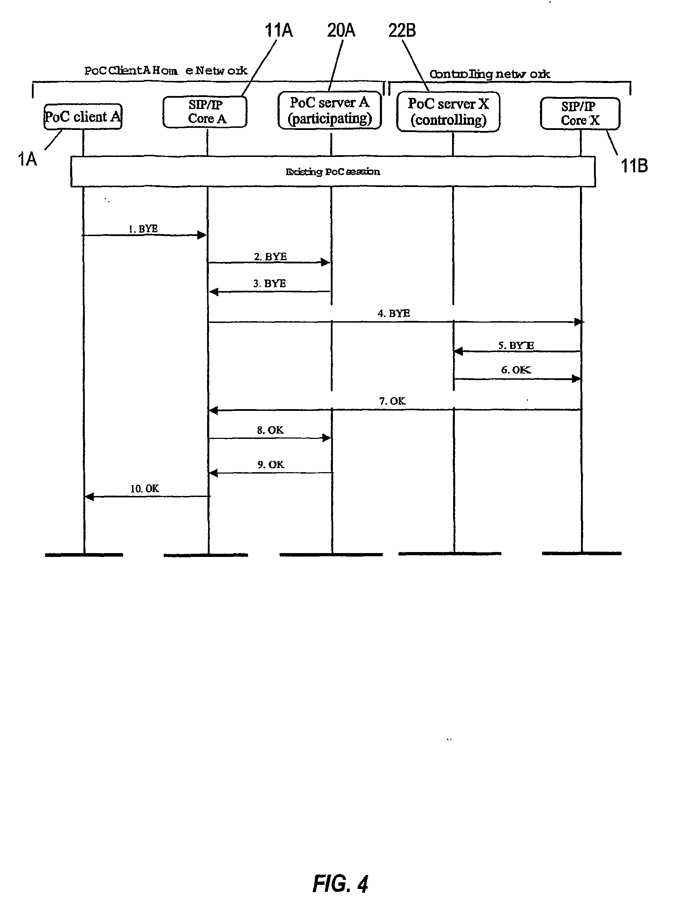

Figure 4 shows the high-level signalling procedure for a PoC Client leaving the PoC group session.

Messages 1-5: The PoC Client 1A stops sending talk burst control messages and stops sending/receiving media and sends a BYE request through the signalling path to the PoC Server 13B. Information elements contained in the BYE request are:
a. PoC Address of the Participant leaving this PoC Session

Messages 6-10: Upon receiving the request, the PoC Server 13B (controlling) performs the necessary procedures to remove the PoC Client 1A. The PoC Server 13B (controlling) sends an OK response to the PoC Client 1A through the signalling path, which has routed the request.

It can be seen that in this known signalling arrangement there is no mechanism for the participating PoC functions associated with the PoC Clients remaining in the PoC session to be notified of PoC Client 1A's leaving.

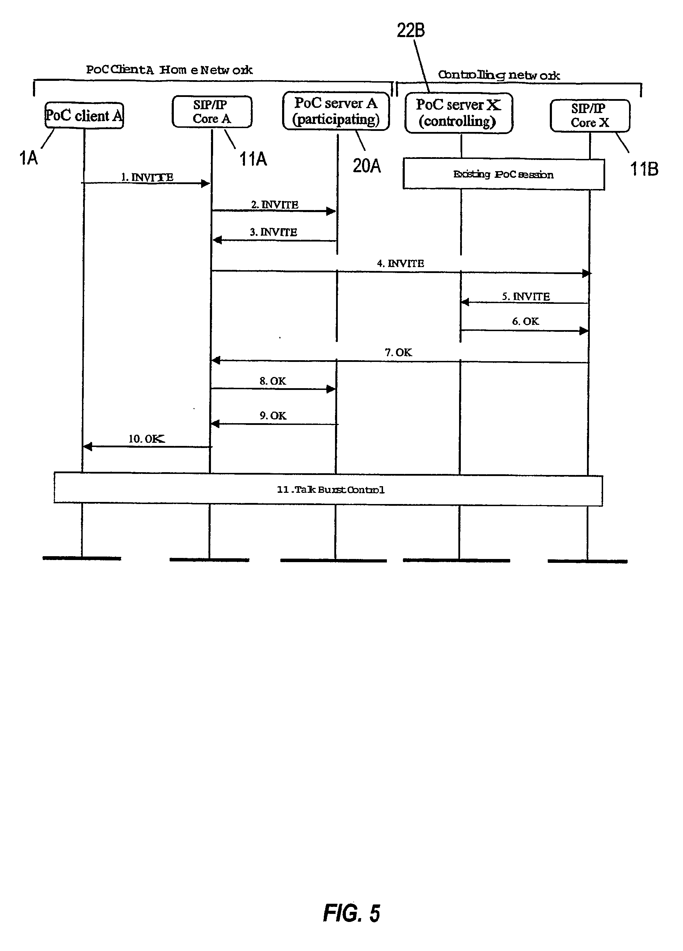

Figure 5 shows the high-level signalling procedure for a PoC Client to re-join the PoC Group Session.

Message 1: The PoC Client 1A sends an INVITE request to the IMS core 11A. Information elements contained in the INVITE request are:
a. PoC Group Session Identity.
b. PoC service indication.

Message 2: The IMS Core 11A routes the INVITE request to the PoC Server 13A (participating) triggered on the PoC Service indication and the PoC Address. Information elements contained in the INVITE request are:
a. PoC Group Session Identity
b. PoC service indication

Message 3 : The PoC Server 13A (participating) identifies that the PoC Group is not hosted in this PoC Server therefore it sends the request to the IMS Core 11A. Information elements contained in the INVITE request are:
a. A PoC Group Session Identity
b. PoC service indication

Message 4: The IMS Core 11A routes the request to IMS Core 11B according to the routing principles of the IMS Cores. Information elements contained in the INVITE request are:
a. PoC Group Session Identity
b. PoC service indication

Message 5: The IMS Core 11B routes the request to the controlling PoC Server 13B based on the PoC Group Session Identity. Information elements contained in the INVITE request are:
a. PoC Group Session Identity
b. PoC service indication

Messages 6-10: Upon receiving the request, the PoC Server 13B (controlling) performs the necessary procedures to add the PoC Client 1A to the session. The PoC Server 13B (controlling) sends an OK response to the PoC Client 1A through the signalling path, which has routed the request. The PoC Client 1A stores the contact address of the PoC Server 13B (controlling).

The controlling PoC Server maintains a record of all the active participants in a PoC communication session. However, it can be seen that there is no mechanism for the joining of the PoC Client 1A to the PoC session to be notified to the participating PoC functions associated with the PoC Clients already present in the PoC session.

Talk burst control provides a mechanism to arbitrate the participant's requests to speak. The controlling PoC Server and PoC Clients support arbitration of talk burst requests (without queuing). The mechanism for talk burst request (without queuing) allows the controlling PoC Server and PoC Client to support talk burst request, Talk Burst Granted response, talk burst reject, talk burst completed; no talk burst, receiving talk burst, stop talk burst and talk burst acknowledgement message, described above.

If the controlling PoC Server and PoC Client can additionally support queuing of talk burst requests, then the controlling PoC Server and PoC Client additionally supports the talk burst queue position request and talk burst queue position status messages.

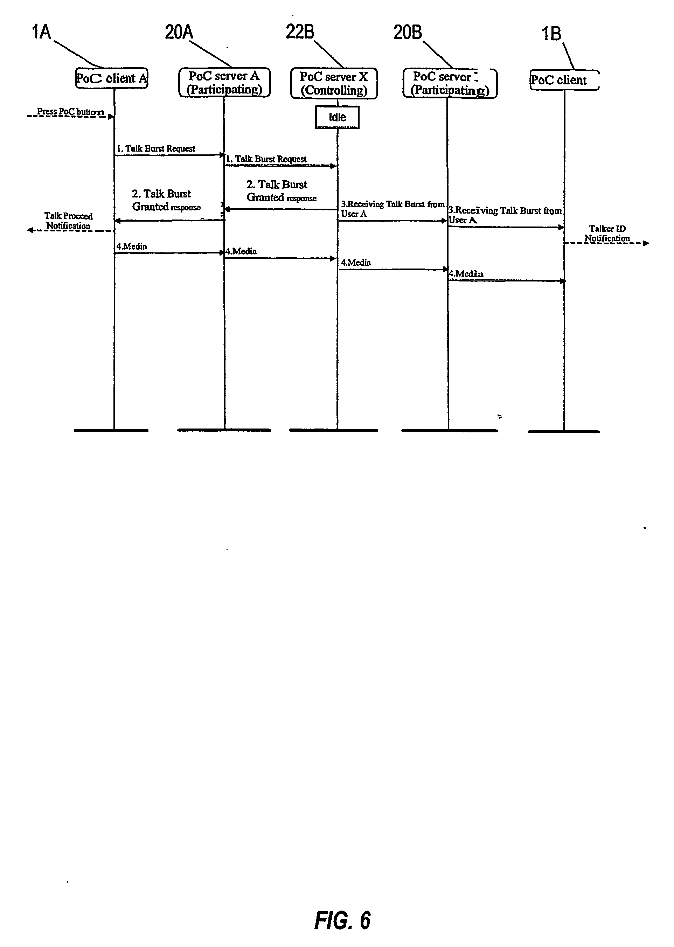

When a PoC Client, connected to a PoC session, successfully requests permission to send a talk burst, and no other PoC Client has permission to send, the talk burst control flow is as shown in Figure 6.

Message 1: The user of PoC Client 1A presses the PoC button when no other PoC User is known to have permission to send a talk burst, and PoC Client 1A sends a talk burst request message to PoC Server 13B (controlling).

Message 2: PoC Server 13B (controlling) decides to grant the talk burst to PoC Client 1A and sends a Talk Burst Granted response message to PoC Client 1A.

Message 3: At the same time PoC Server 13B (controlling) sends a receiving talk burst message to the other PoC Clients on the PoC Session (such as Client 1B shown in Figure 6) with PoC User 1A's identity. The message is sent via PoC Client 1B's participating PoC Server (which may also be part of PoC Server 13B).

Message 4: When PoC Client 1A receives the Talk Burst Granted response message, it provides a talk proceed notification to its user. PoC Client 1A then begins to send media (captured speech - a talk burst) to PoC Server 13B (controlling). PoC Server 13B (controlling) forwards this media to the other PoC Clients (such as PoC Client 1B) via its associated participating PoC function 20B.

It can be seen from the above description that only the controlling PoC Server knows the number of recipients of a message. The participating PoC Servers do not have this information in the conventional PoC arrangement. However, the participating PoC Server is responsible for charging the PoC Clients associated therewith. In accordance with an important feature of this embodiment, the number of recipients of the PoC message is added to the Talk Burst Granted response message 2 described above for the participant that is requesting to speak. This information is not send to other recipients (or their participating PoC Servers). The Talk Burst Granted message may have the form shown in Figure 7. The Talk Burst Granted message is different from a conventional Talk Burst Granted message in that the field Z "number of active participants" is additionally provided.

The Talk Burst Granted message is sent from the controlling PoC Server to the relevant participating PoC Server, and the participating PoC Server may then extract the "number of active participants" field Z so that an appropriate charge can be made to the participant. The Talk Burst Granted message is then passed to the relevant participant. However, the "number of active participants" field Z may be removed from the Talk Burst Granted message before forwarding to the participant, if desired. However, it may be advantageous to pass the "number of active participants field" Z to the participant PoC Client so that the user can be provided with an indication of the number of participants to which their talk burst will be sent.

The embodiment of the invention allows the participant that sends a talk burst to be charged in accordance with the number of recipients. However, no significant signalling overhead is incurred. Each time a participant leaves or joins the group, it is not necessary for each other participant and participating PoC Server to be notified of this. The "number of active participants" field Z is added to the TalkBurst Granted message that is sent by the controlling PoC Server to the relevant participating PoC Server associated with the participant that originates the talk burst. No other modification to the known PoC signalling arrangements are required.

Although this specification refers to a "Talk Burst Granted" message, that term should not necessarily be interpreted narrowly. The message described grants permission or confirms permission for a device or client to send a talk burst during a PoC communication session. Such messages are alternatively referred to as "Talk Burst Confirm" messages. The message indicates to the device or the client that it has the floor.

## Claims

1. A method of operating a push-to-talk over cellular, PoC, communication session for a group of telecommunication devices (1A,1A',1B) in which a talk burst generated by one of the devices is transmitted to the other devices that are participating in the session, wherein a controlling function (22B) controls the joining of or leaving of each of the devices from the communication session and the generating of permission for the devices to send a talk burst, wherein each device communicates with the controlling function by means of a participating function (20A,20A',20B) associated with that device, and **characterised in that** the controlling function (22B) provides an indication of the number of devices currently participating in the communication session to the participating function (20A,20A',20B) associated with a device when that device is granted permission to send a talk burst to the other devices participating in the communication session.

2. The method of claim 1, wherein the controlling function maintains a record of the devices currently participating in the communication session.

3. The method of claim 1 or 2, wherein the devices in said group have a group identifier in common that is interpretable by the control function.

4. The method of any one of claims 1 to 3, wherein the participating function that receives the indication causes a charge to be rendered to the user of the device associated with that participating function in dependence upon the number of devices currently participating in the communication session and which will receive the talk burst.

5. The method of any one of claims 1 to 4, wherein the participating function that receives the indication transmits that indication to the device associated therewith for allowing that device to indicate to the user thereof the number of devices currently participating in the communication session and which will receive the talk burst.

6. The method of any one of claims 1 to 5, wherein, when the controlling function grants permission for said one of the devices to send a talk burst, it sends that device a message that is interpretable by that device to instruct that device to transmit the talk burst, and which message further includes said indication of the number of devices currently participating in the communication session.

7. The method of claim 6, wherein said message is passed to the device associated with the participating function.

8. The method of claim 7, wherein the participating function modifies said message by removing said indication therefrom prior to transmission of the modified message to the device associated with the participating function.

9. The method of any one of claims 1 to 8, wherein at least one of the devices is registered with a mobile or cellular telecommunications network, and wherein the or each device comprises a mobile or cellular telecommunications terminal for communicating wirelessly with the mobile telecommunications network.

10. The method of any one of claims 1 to 9, wherein the communications network comprises a GSM communications network.

11. The method of any one of claims 1 to 9, wherein the communications network comprises a UMTS 3G communications network.

12. The method of any one of claims 1 to 11, wherein the communications network comprises a GPRS communications network.

13. The method of any one of claims 1 to 12, wherein the communication session comprises a session initiation protocol, SIP, session.

14. The method of any one of claims 1 to 13, wherein, during the communication session, speech data are reproduced on said one of the devices or the or each of the other devices but not simultaneously on said one of the devices and the or each of the other devices.

15. A communication system for operating a push-to-talk over cellular, PoC, communication session for a group of telecommunication devices (1A,1A',1B) in which a talk burst generated by one of the devices is transmitted to the other devices that are participating in the session, the system including means (22B) for performing a controlling function which is adapted to control the joining of or leaving of each of the devices from the communication session and the generating of permission for the devices to send a talk burst, wherein each device is adapted to communicate with the controlling function (22B) by means of a participating function (20A,20A',20B) associated with that device, and wherein the controlling function (22B) is adapted to provide an indication of the number of devices currently participating in the communication session to the participating function (20A,20A',20B) associated with a device when that device is granted permission to send a talk burst to the other devices participating in the communication session.

16. The system of claim 15, wherein the controlling function is adapted to maintain a record of the devices currently participating in the communication session.

17. The system of claim 15 or 16, wherein the devices in said group have a group identifier in common that is interpretable by the control function.

18. The system of any one of claims 15 to 17, wherein the participating function that receives the indication is adapted to cause a charge to be rendered to the user of the device associated with that participating function in dependence upon the number of devices currently participating in the communication session and which will receive the talk burst.

19. The system of any one of claims 15 to 18, wherein the participating function that receives the indication is adapted to transmit that indication to the device associated therewith for allowing that device to indicate to the user thereof the number of devices currently participating in the communication session and which will receive the talk burst.

20. The system of any one of claims 15 to 19, wherein, when the controlling function grants permission for said one of the devices to send a talk burst, it is adapted to send that device a message that is interpretable by that device to instruct that device to transmit the talk burst, and which message further includes said indication of the number of devices currently participating in the communication session.

21. The system of claim 20, wherein said message is passed to the device associated with the participating function.

22. The system of claim 21, wherein the participating function is adapted to modify said message by removing said indication therefrom prior to transmission of the modified message to the device associated with the participating function.

23. The system of any one of claims 15 to 22, wherein at least one of the devices is registered with a mobile or cellular telecommunications network, and wherein the or each device comprises a mobile or cellular telecommunications terminal for communicating wirelessly with the mobile telecommunications network.

24. The system of any one of claims 15 to 23, wherein the communications network comprises a GSM communications network.

25. The system of any one of claims 15 to 23, wherein the communications network comprises a UMTS 3G communications network.

26. The system of any one of claims 15 to 23, wherein the communications network comprises a GPRS communications network.

27. The system of any one of claims 15 to 26, wherein the communication session comprises a session initiation protocol, SIP, session.

28. The system of any one of claims 15 to 27, wherein, during the communication session, speech data are reproduced on said one of the devices or the or each of the other devices but not simultaneously on said one of the devices and the or each of the other devices.

29. A push-to-talk over cellular, PoC, server for use with a cellular telecommunications network for controlling the transmission of speech data to devices (1A,1A',1B) registered with that network, the server being adapted for implementing a control function (22B) for establishing a PoC communication session between a group of said devices, maintaining a record of devices participating in the session and controlling the transmission of speech data from one of the devices, being the transmitting device, participating in the communication session to the other devices, being the receiving devices, participating in the session by selectively generating a message which grants the transmitting device permission to send speech data to the receiving devices, **characterised in that** said message includes an indication of the number of devices participating in the communication session such that the user of the transmitting device can be charged according to the number of receiving devices participating in the communication session and which will receive the speech data.

30. The server of claim 29, wherein the control function is adapted to communicate said message to a participating function (20A,20A',20B) associated with the transmitting device, and information comprised in said message is passed by the participating function to the transmitting device for controlling the transmission of speech data by that device.

## Patentansprüche

1. Verfahren zum Betreiben einer PoC-(Push-to-Talk over Cellular)-Kommunikationssession für eine Gruppe von Telekommunikationsgeräten (1A, 1A', 1B), bei denen ein von einem der Geräte erzeugter Talk-Burst zu den anderen an der Session teilnehmenden Geräten übertragen wird, wobei eine Steuerfunktion (22B) das Zu- oder Wegschalten der einzelnen Geräte zu/von der Kommunikationssession sowie das Erzeugen einer Genehmigung zum Senden eines Talk-Burst für die Geräte steuert, wobei jedes Gerät mit der Steuerfunktion über eine mit diesem Gerät assoziierte Teilnahmefunktion (20A, 20A', 20B) kommuniziert, und **dadurch gekennzeichnet, dass** die Steuerfunktion (22B) die Zahl der gerade an der Kommunikationssession teilnehmenden Geräte der mit einem Gerät assoziierten Teilnahmefunktion (20A, 20A', 20B) anzeigt, wenn dieses Gerät die Genehmigung zum Senden eines Talk-Burst zu den anderen an der Kommunikationssession teilnehmenden Geräten erhält.

2. Verfahren nach Anspruch 1, wobei die Steuerfunktion einen Datensatz der gerade an der Kommunikationssession teilnehmenden Geräte führt.

3. Verfahren nach Anspruch 1 oder 2, wobei die Geräte in der genannten Gruppe eine Gruppenkennung gemeinsam haben, die von der Steuerfunktion interpretiert werden kann.

4. Verfahren nach einem der Ansprüche 1 bis 3, wobei die Teilnahmefunktion, die die Anzeige empfängt, bewirkt, dass der Benutzer des mit dieser Teilnahmefunktion assoziierten Gerätes mit einer Gebühr in Abhängigkeit von der Zahl der gerade an der Kommunikationssession beteiligten Geräte und von den den Talk-Burst empfangenden Geräten belastet wird.

5. Verfahren nach einem der Ansprüche 1 bis 4, wobei die Teilnahmefunktion, die die Anzeige erhält, diese Anzeige zu dem damit verbundenen Gerät überträgt, damit dieses Gerät seinem Benutzer die Zahl der gerade an der Kommunikationssession teilnehmenden Geräte, die den Talk-Burst empfangen, anzeigen kann.

6. Verfahren nach einem der Ansprüche 1 bis 5, wobei die Steuerfunktion, wenn sie dem genannten einen der Geräte die Genehmigung zum Senden eines Talk-Burst gewährt, diesem Gerät eine Nachricht sendet, die von dem Gerät als ein Befehl zum Senden des Talk-Burst interpretiert werden kann, und wobei diese Nachricht ferner die genannte Anzeige der Zahl der gerade an der Kommunikationssession teilnehmenden Geräte beinhaltet.

7. Verfahren nach Anspruch 6, wobei die genannte Nachricht zu dem mit der Teilnahmefunktion assoziierten Gerät geleitet wird.

8. Verfahren nach Anspruch 7, wobei die Teilnahmefunktion die genannte Nachricht modifiziert, indem sie vor dem Senden der modifizierten Nachricht zu dem mit der Teilnahmefunktion assoziierten Gerät die genannte Anzeige daraus entfernt.

9. Verfahren nach einem der Ansprüche 1 bis 8, wobei wenigstens eines der Geräte bei einem Mobil- oder Funktelekommunikationsnetz registriert ist und wobei das oder jedes Gerät ein Mobil- oder Funktelekommunikationsendgerät zum drahtlosen Kommunizieren mit dem Mobilfunktelekommunikationsnetz umfasst.

10. Verfahren nach einem der Ansprüche 1 bis 9, wobei das Kommunikationsnetz ein GSM-Kommunikationsnetz umfasst.

11. Verfahren nach einem der Ansprüche 1 bis 9, wobei das Kommunikationsnetz ein UMTS-Kommunikationsnetz (3G) umfasst.

12. Verfahren nach einem der Ansprüche 1 bis 11, wobei das Kommunikationsnetz ein GPRS-Kommunikationsnetz umfasst.

13. Verfahren nach einem der Ansprüche 1 bis 12, wobei die Kommunikationssession eine SIP-(Session Initiation Protocol)-Session umfasst.

14. Verfahren nach einem der Ansprüche 1 bis 13, wobei während der Kommunikationssession Sprachdaten auf dem genannten einen der Geräte oder dem oder jedem der anderen Geräte, aber nicht gleichzeitig auf dem genannten einen der Geräte und dem oder jedem der genannten anderen Geräte wiedergegeben werden.

15. Kommunikationssystem zum Betreiben einer PoC-(Push-to-talk over Cellular)-Kommunikationssession für eine Gruppe von Telekommunikationsgeräten (1A, 1A, 1B), wobei ein von einem der Geräte erzeugter Talk-Burst zu den anderen an der Session teilnehmenden Geräten übertragen wird, wobei das System Mittel (22B) zum Ausführen einer Steuerfunktion beinhaltet, die die Aufgabe hat, das Zu- oder Wegschalten jedes der Geräte zu/von der Kommunikationssession und das Erzeugen einer Genehmigung zum Senden eines Talk-Burst für die Geräte zu steuern, wobei jedes Gerät die Aufgabe hat, mit der Steuerfunktion (22B) mittels einer mit diesem Gerät assoziierten Teilnahmefunktion (20A, 20A', 20B) zu kommunizieren, und wobei die Steuerfunktion (20B) die Aufgabe hat, der mit einem Gerät assoziierten Teilnahmefunktion (20A, 20A', 20B) die Zahl der gerade an der Kommunikationssession teilnehmenden Geräte anzuzeigen, wenn dieses Gerät die Genehmigung zum Senden eines Talk-Burst zu den anderen an der Kommunikationssession teilnehmenden Geräten erhält.

16. System nach Anspruch 15, wobei die Steuerfunktion die Aufgabe hat, einen Datensatz der gerade an der Kommunikationssession teilnehmenden Geräte zu führen.

17. System nach Anspruch 15 oder 16, wobei die Geräte in der genannten Gruppe eine Gruppenkennung gemeinsam haben, die von der Steuerfunktion interpretiert werden kann.

18. System nach einem der Ansprüche 15 bis 17, wobei die Teilnahmefunktion, die die Anzeige empfängt, die Aufgabe hat, den Benutzer des mit dieser Teilnahmefunktion assoziierten Gerätes in Abhängigkeit von der Zahl der gerade an der Kommunikationssession teilnehmenden Geräte und in Abhängigkeit davon, welche den Talk-Burst erhalten, mit einer Gebühr zu belasten.

19. System nach einem der Ansprüche 15 bis 18, wobei die Teilnahmefunktion, die die Anzeige erhält, die Aufgabe hat, diese Anzeige zu dem damit assoziierten Gerät zu senden, um es zuzulassen, dass das Gerät dem Benutzer davon die Zahl der gerade an der Kommunikationssession teilnehmenden Geräte sowie die Geräte anzeigt, die den Talk-Burst erhalten.

20. System nach einem der Ansprüche 15 bis 19, wobei die Steuerfunktion, wenn sie einem der Geräte die Genehmigung zum Senden eines Talk-Burst gewährt, dem Gerät eine Nachricht sendet, die von dem Gerät als Befehl zum Senden des Talk-Burst interpretiert werden kann, und wobei diese Nachricht ferner die genannte Anzeige der gerade an der Kommunikationssession teilnehmenden Geräte enthält.

21. System nach Anspruch 20, wobei die genannte Nachricht zu dem mit der Teilnahmefunktion assoziierten Gerät geleitet wird.

22. System nach Anspruch 21, wobei die Teilnahmefunktion die Aufgabe hat, die genannte Nachricht zu modifizieren, indem sie vor dem Senden der genannten modifizierten Nachricht zu dem mit der Teilnahmefunktion assoziierten Gerät die genannte Anzeige daraus entfernt.

23. System nach einem der Ansprüche 15 bis 22, wobei wenigstens eines der Geräte bei einem Mobil- oder Funktelekommunikationsnetz registriert ist und wobei das oder jedes Gerät ein Mobil- oder Funktelekommunikationsendgerät zum drahtlosen Kommunizieren mit dem Mobilfunktelekommunikationsnetz umfasst.

24. System nach einem der Ansprüche 15 bis 23, wobei das Kommunikationsnetz ein GSM-Kommunikationsnetz umfasst.

25. System nach einem der Ansprüche 15 bis 23, wobei das Kommunikationsnetz ein UMTS-Kommunikationsnetz (3G) umfasst.

26. System nach einem der Ansprüche 15 bis 23, wobei das Kommunikationsnetz ein GPRS-Kommunikationsnetzwerk umfasst.

27. System nach einem der Ansprüche 15 bis 26, wobei die Kommunikationssession eine SIP-(Session Initiation Protocol)-Session umfasst.

28. System nach einem der Ansprüche 15 bis 27, wobei während der Kommunikationssession Sprachdaten auf dem genannten einen der genannten Geräte oder auf dem oder jedem der anderen Geräte, aber nicht gleichzeitig auf dem genannten einen der Geräte und auf dem oder jedem der anderen Geräte wiedergegeben werden.

29. PoC-(Push-to-Talk over Cellular)-Server für die Verwendung mit einem Funktelekommunikationsnetz zum Steuern des Sendens von Sprachdaten zu bei diesem Netzwerk registrierten Geräten (1A, 1A', 1B), wobei der Server die Aufgabe hat, eine Steuerfunktion (22B) zum Einrichten einer PoC-Kommunikationssession zwischen einer Gruppe der genannten Geräte zu implementieren, einen Datensatz von an der Session teilnehmenden Geräten zu führen und das Senden von Sprachdaten von einem der an der Kommunikationssession beteiligten Geräte, dem Sendegerät, zu den anderen an der Session teilnehmenden Geräten, den Empfangsgeräten durch selektives Erzeugen einer Nachricht zu steuern, die dem Sendegerät die Genehmigung zum Senden von Sprachdaten zu den Empfangsgeräten gewährt, **dadurch gekennzeichnet, dass** die genannte Nachricht eine Anzeige der Zahl der an der Kommunikationssession teilnehmenden Geräte enthält, so dass der Benutzer des Sendegerätes je nach der Zahl der an der Kommunikationssession teilnehmenden Geräte und je nach dem belastet werden kann, welche Geräte die Sprachdaten empfangen.

30. Server nach Anspruch 29, wobei die Steuerfunktion die Aufgabe hat, die genannte Nachricht zu einer mit dem Sendegerät assoziierten Teilnahmefunktion (20A, 20A', 20B) zu senden, und in der genannten Nachricht enthaltene Informationen von der Teilnahmefunktion zum Sendegerät geleitet werden, um die Übertragung von Sprachdaten durch dieses Gerät zu steuern.

## Revendications

1. Procédé servant à opérer une session de communications Push-to-talk sur réseaux cellulaires, POC, pour un groupe de dispositifs de télécommunication (1A, 1A', 1B) dans lequel une rafale vocale générée par l'un des dispositifs est transmise aux autres dispositifs qui participent à la session, alors qu'une fonction de commande (22B) pilote l'entrée et la sortie de chacun des dispositifs de la session de communication, ainsi que la génération d'une autorisation permettant aux dispositifs d'envoyer une rafale vocale, cas dans lequel chaque dispositif communique avec la fonction de commande par l'intermédiaire d'une fonction de participation (20A, 20A', 20B) qui est associée à ce dispositif, et **caractérisé en ce que** la fonction de commande (22B) fournit une indication du nombre de dispositifs participant actuellement à la session de communication à la fonction de participation (20A, 20A', 20B) qui est associée à un dispositif lorsque ce dispositif a obtenu l'autorisation d'envoyer une rafale vocale vers les autres dispositifs participant à la session de communication.

2. Procédé selon la revendication 1, la fonction de commande conservant un fichier des dispositifs qui participent actuellement à la session de communication.

3. Procédé selon la revendication 1 ou 2, les dispositifs dans ledit groupe ayant en commun un identifiant de groupe que la fonction de commande est capable d'interpréter.

4. Procédé selon l'une quelconque des revendications 1 à 3, la fonction de participation qui reçoit l'indication faisant en sorte qu'une somme est imputée à l'utilisateur du dispositif associé à cette fonction de participation, en dépendance du nombre de dispositifs participant actuellement à la session de communication et qui va recevoir la rafale vocale.

5. Procédé selon l'une quelconque des revendications 1 à 4, la fonction de participation qui reçoit l'indication transmettant cette indication au dispositif associé à celle-ci afin d'autoriser ce dispositif à indiquer à l'utilisateur de celui-ci le nombre de dispositifs qui participent actuellement à la session de communication et qui vont recevoir la rafale vocale.

6. Procédé selon l'une quelconque des revendications 1 à 5, cas dans lequel, lorsque la fonction de commande accorde l'autorisation à l'un desdits dispositifs d'envoyer une rafale vocale, il va envoyer à ce dispositif un message qui est interprétable par ledit dispositif pour ordonner à ce dispositif de transmettre la rafale vocale, et ce message inclut en outre ladite indication du nombre de dispositifs qui participent actuellement à la session de communication.

7. Procédé selon la revendication 6, ledit message étant acheminé au dispositif associé à la fonction de participation.

8. Procédé selon la revendication 7, la fonction de participation modifiant ledit message en enlevant de celui-ci ladite indication avant de transmettre le message modifié au dispositif associé à la fonction de participation.

9. Procédé selon l'une quelconque des revendications 1 à 8, l'un au moins des dispositifs étant inscrit sur un réseau de télécommunications mobiles ou cellulaires, alors que ledit dispositif ou chaque dispositif comprend un terminal de télécommunications mobiles ou cellulaires afin de communiquer sans fil avec le réseau de télécommunications mobiles.

10. Procédé selon l'une quelconque des revendications 1 à 9, le réseau de communications comprenant un réseau de communications GSM.

11. Procédé selon l'une quelconque des revendications 1 à 9, le réseau de communications comprenant un réseau de communications UMTS 3G.

12. Procédé selon l'une quelconque des revendications 1 à 11, le réseau de communications comprenant un réseau de communications GPRS.

13. Procédé selon l'une quelconque des revendications 1 à 12, la session de communications comprenant une session SIP (Session Initiation Protocol).

14. Procédé selon l'une quelconque des revendications 1 à 13, cas dans lequel, pendant la session de communication, des données vocales sont reproduites sur ledit dispositif ou bien sur un ou chacun des autres dispositifs, mais pas en simultanéité sur ledit dispositif ou bien sur un ou chacun des autres dispositifs.

15. Système de communication pour opérer une session de communications Push-to-talk sur réseaux cellulaires, POC, pour un groupe de dispositifs de télécommunication (1A, 1A', 1B) dans lequel une rafale vocale générée par l'un des dispositifs est transmise aux autres dispositifs qui participent à la session, le système incluant des moyens (22B) pour assurer une fonction de commande laquelle est adaptée pour piloter l'entrée et la sortie de chacun des dispositifs de la session de communication, ainsi que la génération d'une autorisation permettant aux dispositifs d'envoyer une rafale vocale, cas dans lequel chaque dispositif est adapté pour communiquer avec la fonction de commande (22B) par l'intermédiaire d'une fonction de participation (20A, 20A', 20B) qui est associée à ce dispositif, et la fonction de commande (20B) étant adaptée pour fournir une indication du nombre de dispositifs participant actuellement à la session de communication à la fonction de participation (20A, 20A', 20B) qui est associée à un dispositif lorsque ce dispositif a obtenu l'autorisation d'envoyer une rafale vocale vers les autres dispositifs participant à la session de communication.

16. Système selon la revendication 15, la fonction de commande étant adaptée pour conserver un fichier des dispositifs qui participent actuellement à la session de communication.

17. Système selon la revendication 15 ou 16, les dispositifs dans ledit groupe ayant en commun un identifiant de groupe que la fonction de commande est capable d'interpréter.

18. Système selon l'une quelconque des revendications 15 à 17, la fonction de participation qui reçoit l'indication étant adaptée pour faire en sorte qu'une somme est imputée à l'utilisateur du dispositif associé à cette fonction de participation, en dépendance du nombre de dispositifs participant actuellement à la session de communication et qui va recevoir la rafale vocale.

19. Système selon l'une quelconque des revendications 15 à 18, la fonction de participation qui reçoit l'indication étant adaptée pour transmettre cette indication au dispositif associé à celle-ci afin d'autoriser ce dispositif à indiquer à l'utilisateur de celui-ci le nombre de dispositifs qui participent actuellement à la session de communication et qui vont recevoir la rafale vocale.

20. Système selon l'une quelconque des revendications 15 à 19, cas dans lequel, lorsque la fonction de commande accorde l'autorisation à l'un desdits dispositifs d'envoyer une rafale vocale, il est adapté pour envoyer à ce dispositif un message qui est interprétable par ledit dispositif pour ordonner à ce dispositif de transmettre la rafale vocale, et ce message inclut en outre ladite indication du nombre de dispositifs qui participent actuellement à la session de communication.

21. Système selon la revendication 20, ledit message étant acheminé au dispositif associé à la fonction de participation.

22. Système selon la revendication 21, la fonction de participation étant adaptée pour modifier ledit message en enlevant de celui-ci ladite indication avant de transmettre le message modifié au dispositif associé à la fonction de participation.

23. Système selon l'une quelconque des revendications 15 à 22, l'un au moins des dispositifs étant inscrit sur un réseau de télécommunications mobiles ou cellulaires, alors que ledit dispositif ou chaque dispositif comprend un terminal de télécommunications mobiles ou cellulaires afin de communiquer sans fil avec le réseau de télécommunications mobiles.

24. Système selon l'une quelconque des revendications 15 à 23, le réseau de communications comprenant un réseau de communications GSM.

25. Système selon l'une quelconque des revendications 15 à 23, le réseau de communications comprenant un réseau de communications UMTS 3G.

26. Système selon l'une quelconque des revendications 15 à 23, le réseau de communications comprenant un réseau de communications GRPS.

27. Système selon l'une quelconque des revendications 15 à 26, la session de communications comprenant une session SIP (Session Initiation Protocol).

28. Système selon l'une quelconque des revendications 15 à 27, cas dans lequel, pendant la session de communication, des données vocales sont reproduites sur ledit dispositif ou bien sur un ou chacun des autres dispositifs, mais pas en simultanéité sur ledit dispositif ou bien sur un ou chacun des autres dispositifs.

29. Serveur à technologie Push-to-talk sur réseaux cellulaires, POC, destiné à être utilisé avec un réseau de télécommunications cellulaires afin de piloter la transmission de données vocales vers des dispositifs (1A, 1A', 1B) inscrits sur ce réseau, le serveur étant adapté pour implémenter une fonction de commande (22B) afin d'établir une session de communication PoC entre un groupe desdits dispositifs, de conserver un fichier des dispositifs participant à la session et de piloter la transmission des données vocales provenant de l'un des dispositifs participant à la session de communication - qui constitue le dispositif émetteur - en direction des autres dispositifs participant à la session de communication - qui constituent les dispositifs récepteurs - grâce à la génération sélective d'un message qui accorde au dispositif émetteur l'autorisation d'envoyer des données vocales aux dispositifs récepteurs, **caractérisé en ce que** ledit message inclut une indication du nombre de dispositifs participant à la session de communication de telle sorte que l'utilisateur du dispositif émetteur puisse être facturé sur la base du nombre de dispositifs récepteurs qui participent à la session de communication et qui vont recevoir les données vocales.

30. Serveur selon la revendication 29, la fonction de commande étant adaptée pour communiquer ledit message à une fonction de participation (20A, 20A', 20B) laquelle est associée au dispositif émetteur, et des informations incorporées audit message étant acheminées par la fonction de participation vers le dispositif émetteur en vue de piloter la transmission des données vocales par ce dispositif.
